# EUROPÄISCHE PATENTSCHRIFT

(11) **EP 3 265 405 B1**
(45) Veröffentlichungstag und Bekanntmachung des Hinweises auf die Patenterteilung: **27.03.2019**
(21) Anmeldenummer: 16700232.8
(22) Anmeldetag: 12.01.2016
(51) Int. Cl.: B65G 1/04

(54) **REGALLAGER MIT EINEM KREISVERKEHR AUF EINER GESCHLOSSENEN FÜHRUNGSBAHN**
RACK STORE WITH A ROUNDABOUT ON A CLOSED GUIDE TRACK
MAGASIN À RAYONNAGES COMPRENANT UN ROND-POINT SUR UNE VOIE DE GUIDAGE FERMÉE

(30) Priorität: 04.03.2015 AT 501682015
(43) Veröffentlichungstag der Anmeldung: 10.01.2018
(73) Patentinhaber: Knapp AG, 8075 Hart bei Graz (AT)
(72) Erfinder: MATHI, Franz, 8200 Gleisdorf (AT); SÜSS, Heiko, 8044 Graz (AT); LAFER, Christoph, 8350 Fehring (AT); PUNTIGAM, Wolfgang, 8322 Studenzen (AT)
(74) Vertreter: Röggla, Harald
(86) Internationale Anmeldenummer: PCT/EP2016/050421
(87) Internationale Veröffentlichungsnummer: WO 2016/139003

(56) Entgegenhaltungen:
- EP-A1- 2 527 274
- WO-A1-2014/204300
- DE-A1-102011 014 394

## Beschreibung

Die Erfindung betrifft ein Regallager zum Lagern von Artikeln in Lagerplätzen von Regalen, wobei zumindest eine Regalgasse zwischen zumindest zwei Regalen gebildet ist und, wobei erste Führungsbahnen im Wesentlichen in Richtung der Regale und zweite Führungsbahnen im Wesentlichen quer zu den Regalen vorgesehen sind, auf welchen Führungsbahnen zumindest ein Bahnfahrzeug zum Ein- und Auslagern der Artikel von Steuerungsmitteln gesteuert verfahrbar ist.

Die Patentanmeldung WO2014/204 300 A1 offenbart so ein Regallager nach dem Oberbegriff des Anspruchs 1, mit Steuerungsmitteln zum Steuern des Weges den ein Bahnfahrzeug beim Ein- und Auslagern eines Artikels nehmen soll. Je nachdem wie dicht der Verkehr von Bahnfahrzeugen auf einzelnen Führungsbahnen und Kreuzungspunkten von Führungsbahnen ist, beziehungsweise von den Steuerungsmitteln geplant wird, kennzeichnen die Steuerungsmittel diese als "blockiert" oder beispielsweise als "richtungsabhängig nur mit bestimmter Geschwindigkeit befahrbar". Dies soll dazu dienen einen möglichst reibungsfreien Betrieb der Bahnfahrzeuge auf den Führungsbahnen beim Ein- und Auslagern von Artikeln zu gewährleisten. Bei diesem bekannten Regallager hat sich jedoch als Nachteil erwiesen, dass die Steuerungsmittel sehr komplex und somit störungsanfällig sind und nicht den für hoch performante Läger notwendigen Durchsatz erreichen.

Wenn Artikel aus einem Regallager, wie dem in der WO2014/204 300 A1 offenbarten Regallager, zu einem Kommissionierplatz hin ausgelagert werden, dann sollen diese nach Möglichkeit gleich sortiert aus dem Regallager auf die Fördertechnik ausgelagert werden, um möglichst wenig auf der Fördertechnik sortieren zu müssen. Hierzu steuern die Steuerungsmittel die Bahnfahrzeuge so an, dass die Bahnfahrzeuge die Artikel, der gewünschten Sortierung entsprechend, nacheinander aus den einzelnen Lagerplätzen holen und über einen Lift an die Fördertechnik abgeben, worauf die Fördertechnik die sortierten Artikel an den jeweiligen Kommissionierplatz transportiert. Aufgrund von "blockierten" Führungsbahnen, defekten Bahnfahrzeugen oder anderen Umständen kann es jedoch vorkommen, dass die Artikel nicht mit der geforderten Sortierung aus dem Regallager ausgelagert werden können. Aus diesem Grund muss vor dem Regallager eine sogenannte Vorzone als Teil der Fördertechnik realisiert sein, in der beispielsweise durch eine im Kreis geführte Fördertechnik ein Sortieren der Artikel möglich ist bevor die sortierten Artikel aus der im Kreis geführten Fördertechnik ausgeschleust und zum jeweiligen Kommissionierplatz transportiert werden. Hierbei bilden jedoch die Lifte des Regallagers und die Sortierung in der Vorzone ein den Durchsatz beim Auslagern limitierendes Nadelöhr, da die aus den unterschiedlichen Regalebenen des Regallagers ausgelagerten Artikel alle in der in nur einem Kreis geführten Fördertechnik sortiert werden müssen.

Der Erfindung liegt die Aufgabe zugrunde ein Regallager und ein Verfahren zum Betreiben eines solchen Regallagers zu schaffen, bei dem vorstehende Nachteile vermieden werden und möglichst viele Artikel auf kleinstem Raum gelagert, ein- und ausgelagert und kommissioniert werden können. Erfindungsgemäß wird diese Aufgabestellung dadurch gelöst, dass durch erste Führungsbahnen und zweite Führungsbahnen einer Regalebene eine in sich geschlossene Führungsbahn gebildet ist und, dass ein Streckenabschnitt der geschlossenen Führungsbahn jeweils von einem Kreuzungspunkt einer der ersten Führungsbahnen mit einer der zweiten Führungsbahnen zum nächsten Kreuzungspunkt einer der ersten Führungsbahnen mit einer der zweiten Führungsbahnen festgelegt ist und, dass die Steuerungsmittel zum Steuern der Bahnfahrzeuge auf den Streckenabschnitten der geschlossenen Führungsbahn beim Ein- und Auslagern der Artikel in einer Hauptrichtung in Form eines Kreisverkehrs ausgebildet sind so, dass der Streckenabschnitt der geschlossenen Führungsbahn von den Bahnfahrzeugen nur in der Hauptrichtung befahren wird, auf dem sich mehr als ein Bahnfahrzeug befindet, und so, dass der Streckenabschnitt der geschlossenen Führungsbahn von einem Bahnfahrzeug entgegen der Hauptrichtung befahrbar ist beziehungsweise bei Notwendigkeit befahren wird, auf dem sich kein anderes Bahnfahrzeug befindet.

Durch die Festlegung einer Hauptrichtung zum Befahren der Führungsbahnen ist der Vorteil erhalten, dass die Steuerung der Bahnfahrzeuge durch die Steuerungsmittel wesentlich effizienter erfolgen kann. Das Zusammenfassen von zwei ersten und zwei zweiten Führungsbahnen einer Regalebene zu einer geschlossenen Führungsbahn die als Kreisverkehr von den Bahnfahrzeugen in der Hauptrichtung befahren wird ergibt den Vorteil, dass die Bahnfahrzeuge mit relativ hoher Geschwindigkeit und mit wenigen Bremsvorgängen gesteuert werden können, was den Verschleiß und den Energieverbrauch reduziert. Um die Effizienz und den Durchsatz beim Ein- und Auslagern von Artikeln aus dem Regallager noch weiter zu steigern können bestimmte Streckenabschnitte, auf denen gerade kein anderes Bahnfahrzeug fährt, auch entgegen der Hauptrichtung befahren werden. Als kleinstmöglicher Streckenabschnitt ist hierbei der Streckenabschnitt einer Führungsbahn zwischen benachbarten Kreuzungspunkten mit anderen Führungsbahnen zu verstehen.

Die den Kreisverkehr bildende geschlossene Führungsbahn kann hierbei vollständig oder teilweise innerhalb des Regallagers oder auch auf jeder Regalebene den Regalen vorgelagert realisiert sein. Hierdurch ergibt sich der Vorteil, dass in jeder Regalebene eine Möglichkeit zum Sortieren der in der jeweiligen Regalebene ausgelagerten Artikel gegeben ist. Erst anschließend werden die je Regalebene sortierten Artikel an den Lift übergeben und von diesem nach unten transportiert. Hierdurch ist der Vorteil erhalten, dass die von dem Regallager ausgelagerten Artikel fertig sortiert vom Lift abgegeben werden. Dies ermöglicht Kommissionierplätze unmittelbar an den Liften des Regallagers vorzusehen, weshalb auf eine klassische Vorzone und die entsprechende Fördertechnik zum Transport der Artikel zu den Kommissionierplätzen verzichtet werden kann. Dies reduziert den Platzbedarf des Kommissioniersystems und die Zeit zum Kommissionieren eines Auftrags wesentlich. Durch den Wegfall der vorgelagerten Fördertechnik können zusätzlich Kosten gespart und Stehzeiten des Kommissioniersystems für Reparaturarbeiten an der Fördertechnik reduziert werden. Derselbe Vorteil wie bei Kommissionierplätzen wird auch durch die direkte Anbindung von Artikelhandlingplätzen, Wareneingangsplätzen oder Roboterhandlingplätzen an das Regallager erzielt.

Vorteilhaft ist es auch die Hauptrichtung in der geschlossenen Führungsbahn in übereinander liegenden Regalebenen jeweils entgegengesetzt festzulegen. Hierdurch ist es möglich, für wiedereinzulagernde Artikel für welche bereits ein erneuter Bedarf an einem anderen Kommissionierplatz besteht, im Zuge der Wiedereinlagerung die hinsichtlich Wegstrecke optimale Ebene zu nutzten.

Ebenso können Bahnfahrzeuge je nach Bedarf über einen Bahnfahrzeug-Lift in eine Regalebene transportiert werden, in der gerade viele Bahnfahrzeuge zum Ein- und Auslagern von Artikeln benötigt werden.

Diese und weitere vorteilhafte Ausgestaltungen des erfindungsgemäßen Regallagers werden im Folgenden anhand der Figuren näher erläutert.
Figur 1 zeigt eine Draufsicht auf eine Regalebene eines Regallagers, bei dem die zweiten Führungsbahnen der geschlossenen Führungsbahn an der Stirnseite der Regale vorgesehen sind.
Figur 2 zeigt eine Schrägansicht der Regalebene des Regallagers gemäß Figur 1, wobei nur eine geschlossene Führungsbahn vorgesehen ist.
Figur 3 zeigt eine Draufsicht auf eine Regalebene eines Regallagers, bei dem die zweiten Führungsbahnen der geschlossenen Führungsbahn an nur einer Stirnseite der Regale vorgesehen sind.
Figur 4 zeigt eine Schrägansicht von drei Regalebenen des Regallagers gemäß Figur 3.
Figur 5 zeigt eine Schrägansicht von 12 Regalebenen des Regallagers gemäß Figur 3.
Figur 6 zeigt eine Draufsicht auf eine Regalebene eines Regallagers, bei dem die zweiten Führungsbahnen der geschlossenen Führungsbahn an nur einer Stirnseite der Regale vorgesehen sind und über Verbindungs-Führungsbahnen an Lifte angebunden sind, an denen Kommissionierplätze angeordnet sind.
Figur 7 zeigt eine Schrägansicht von drei Regalebenen des Regallagers gemäß Figur 6.
Figur 8 zeigt eine Schrägansicht von 12 Regalebenen des Regallagers gemäß Figur 6.
Figur 9 zeigt eine weitere Schrägansicht von 12 Regalebenen des Regallagers gemäß Figur 6, wobei ein Bahnfahrzeug-Lift vorgesehen ist.
Figur 10 zeigt eine Draufsicht auf ein Regallager gemäß einem weiteren Ausführungsbeispiel der Erfindung.

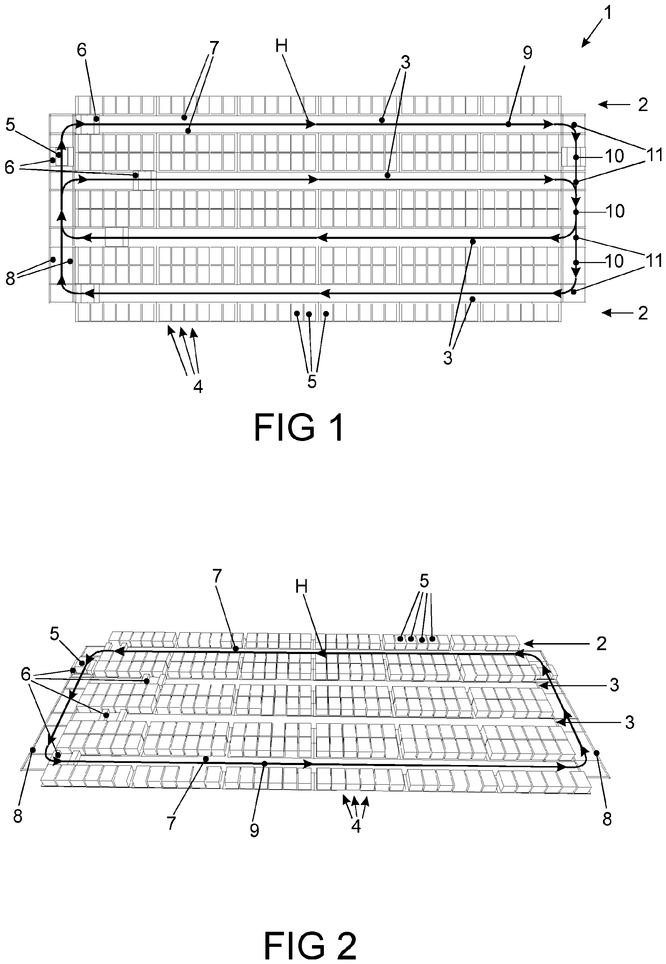

Figur 1 zeigt eine Draufsicht auf eine Regalebene eines Regallagers 1 das acht Regale 2 aufweist, von denen sechs Regale 2 als Doppelregal zusammen gestellt sind, wobei vier Regalgassen 3 gebildet werden. In den Regalen 2 sind eine Vielzahl an Lagerplätzen 4 zum Lagern von Artikeln 5 vorgesehen. Zum Einlagern der Artikel 5 in das Regallager 1 und zum Auslagern der Artikel 5 aus dem Regallager 1 weist das Regallager 1 auf Führungsbahnen geführte Bahnfahrzeuge 6 auf, die durch in den Figuren nicht näher dargestellte Steuerungsmittel gesteuert werden. Solche auf Führungsbahnen geführte Bahnfahrzeuge 6 sind dem Fachmann beispielsweise aus der Patentanmeldung WO2014/204 300 A1 bekannt, weshalb auf deren technische Realisierung hier nicht näher eingegangen ist.

In den Regalgassen 3 des Regallagers 1 sind erste Führungsbahnen 7 bildende Schienen für die Bahnfahrzeuge 6 vorgesehen. An den beiden Stirnseiten der Regale 2 und somit quer zu den Regalen 2 verlaufend sind zweite Führungsbahnen 8 bildende Schienen für die Bahnfahrzeuge 6 vorgesehen. Über die ersten Führungsbahnen 7 und die zweiten Führungsbahnen 8 kann ein Bahnfahrzeug 6 jeden Lagerplatz 4 der Regalebene des Regallagers 1 erreichen, um einen Artikel 5 von einem Lagerplatz 4 auf das Bahnfahrzeug 6 zu ziehen oder von dem Bahnfahrzeug 6 in den Lagerplatz 4 zu schieben.

Die Steuerungsmittel bilden bei dem Regallager 1 aus zwei ersten Führungsbahnen 7 und zwei zweiten Führungsbahnen 8 der Regalebene eine in sich geschlossene Führungsbahn 9 für die beim Ein- und Auslagern von Artikeln 5 für die Bahnfahrzeuge 6 eine Hauptrichtung H als Transportrichtung festgelegt ist, die in der Figur durch Pfeile dargestellt ist. Bei dem Ausführungsbeispiel gemäß Figur 1 sind ineinander greifende geschlossene Führungsbahnen 9 festgelegt, die für jede Regalgasse 3 eine Transportrichtung für die Bahnfahrzeuge 6 festlegen. Die Steuerungsmittel steuern folglich Bahnfahrzeuge 6 in erster Linie entsprechend dieser Hauptrichtungen durch das Regallager 1, wodurch ein strukturierter Verkehr der Bahnfahrzeuge 6 und ein großer Durchsatz beim Ein- und Auslagern von Artikeln 5 erreicht wird. Einerseits können mehrere Bahnfahrzeuge 6 auf einer Führungsbahn gleichzeitig fahren, andererseits ergibt sich durch die einheitliche Transportrichtung der Vorteil, dass mit höherer Geschwindigkeit und weniger Bremsvorgängen gefahren werden kann.

Von den Steuerungsmitteln des Regallagers 1 sind weiters Streckenabschnitte 10 der geschlossenen Führungsbahn 9 festgelegt, die jeweils von einem Kreuzungspunkt 11, einer der ersten Führungsbahnen 7 mit einer der zweiten Führungsbahnen 8, bis zum nächsten Kreuzungspunkt 11, einer der ersten Führungsbahnen 7 mit einer der zweiten Führungsbahnen 8, reichen. Die Steuerungsmittel sind nunmehr dazu ausgebildet Bahnfahrzeuge 6 auf Streckenabschnitten 10, auf denen sich gerade kein anderes Bahnfahrzeug 6 befindet, beziehungsweise für die Dauer des Befahrens durch das eine Bahnfahrzeug 6 befinden wird, auch entgegen der Hauptrichtung H zu befahren. Hierdurch ist der Vorteil erhalten, dass bei der Streckenplanung durch die Steuerungsmittel entsprechend der Hauptrichtung H zu befahrende lange Wege für ein Bahnfahrzeug 6 in einen kurzen Weg entgegen der Hauptrichtung H umgewandelt werden können, wenn gerade kein Verkehr ist. Hierdurch kann der Durchsatz der mit den Bahnfahrzeugen 6 transportierten Artikeln 6 weiter gesteigert werden.

Figur 2 zeigt eine Schrägansicht der Regalebene des Regallagers 1 gemäß Figur 1. In Figur 2 wurden jedoch beispielhaft eine anderer Festlegung der Hauptrichtung H durch die Steuerungsmittel durchgeführt. Gemäß diesem Ausführungsbeispiel der Erfindung ist die Hauptrichtung H nur für die äußeren Regalreihen 3 und hier in Gegenuhrzeigerrichtung festgelegt worden. Die Festlegung, wo in das Regallager 1 eingelagert und ausgelagert wird und wo schnelldrehende und langsamdrehende Artikel 5 gelagert werden, kann auf die Festlegung der Hauptrichtung H einen Einfluss haben.

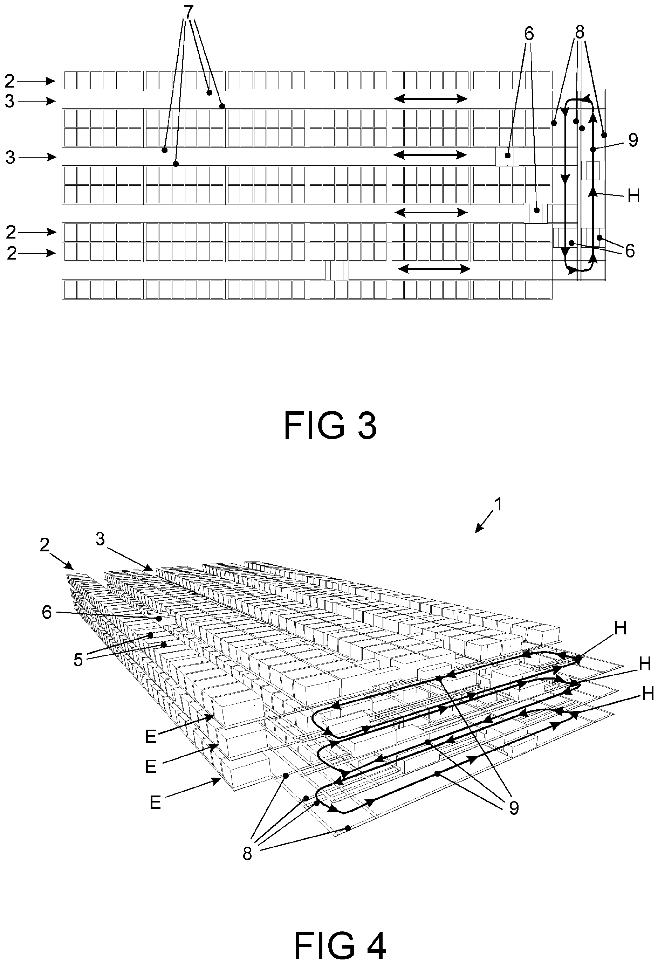

Figur 3 zeigt eine Draufsicht auf eine Regalebene eines Regallagers 1, bei dem die zweiten Führungsbahnen 8 der geschlossenen Führungsbahn 9 an nur einer Stirnseite der Regale 2 angeordnet sind. Hierdurch ist der Vorteil erhalten, dass den ersten Führungsbahnen 7 jeder Regalebene eine geschlossene Führungsbahn 9 vorgelagert ist, von der aus Bahnfahrzeuge 6 in jede der ersten Führungsbahnen 7 gesteuert werden können. Aus den Lagerplätzen 4 dieser Regalebene ausgelagerte Artikel 5 können somit zu 100% sortiert an einen Lift abgegeben werden.

Figur 4 zeigt eine Schrägansicht von drei Regalebenen E des Regallagers 1 gemäß Figur 3. Die Steuerungsmittel steuern die Bahnfahrzeuge 6 in übereinander liegenden Regalebenen E angeordneten geschlossenen Führungsbahnen 9 jeweils in entgegengesetzten Hauptrichtungen H an. Hierdurch ist es möglich, für wiedereinzulagernde Artikel für welche bereits ein erneuter Bedarf an einem anderen Kommissionierplatz besteht, im Zuge der Wiedereinlagerung die hinsichtlich Wegstrecke optimale Ebene zur erneuten Auslagerung zu nutzten.

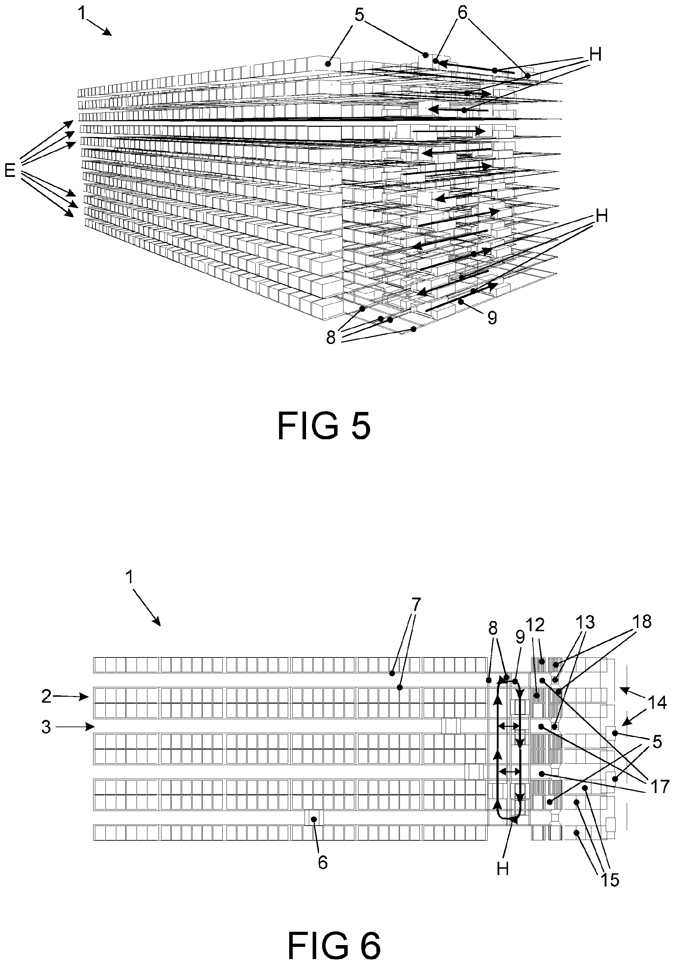

Figur 5 zeigt eine Schrägansicht von 12 Regalebenen E des Regallagers 1 gemäß Figur 3. Die geschlossenen Führungsbahnen 9 sind wieder an der Stirnseite des Regallagers 1 in Verlängerung der Regalgassen 3 angeordnet, wobei die in übereinander angeordneten Regalebenen E jeweils entgegengesetzten Hauptrichtungen H nur durch einen Pfeil angedeutet sind.

Figur 6 zeigt eine Draufsicht auf eine Regalebene E eines Regallagers 1, bei dem die zweiten Führungsbahnen 8 der geschlossenen Führungsbahn 9 wieder nur an einer Stirnseite der Regale 3 vorgesehen sind. Bei dem Regallager 1 schließen an die geschlossene Führungsbahn 9 Ladebuchten 17 an, in denen Bahnfahrzeuge Artikel 5 auf Verbindungsstrecken 12 abgeben, oder von diesen aufnehmen können, ohne den Fluss an Bahnfahrzeugen auf der geschlossenen Führungsbahn zu blockieren. Verbindungsstrecken 12 sind durch eine kurze Fördertechnik gebildet und entkoppeln den Be- und Entladevorgang von der Liftbewegung, indem dort von den Bahnfahrzeugen 6 abgeladene Artikel 5 an Liftplattformen 18 der Lifte 13 übergeben werden. An den Liften 13 des Regallagers 1 schließen unmittelbar Kommissionierplätze 14 an, die eine kurze Fördertechnik als Verbindungsstrecke 15 bis zum eigentlichen manuellen Kommissionierplatz aufweisen. Hierdurch ist der Vorteil erhalten, dass unmittelbar an dem Regallager 1 vier Kommissionierplätze 14 angeordnet sind und die sonst übliche Vorzone entfallen kann. Hierdurch wird Platz in der Lagerhalle gespart, weshalb mehr Artikel auf der gleichen Fläche der Lagerhalle gelagert werden können.

Gemäß einem anderen Ausführungsbeispiel könnten die Verbindungsstrecken 12 auch ohne zwischengeschaltete Ladebuchten 17 an die geschlossene Führungsbahn 9 anschließen. Anstatt der manuellen Kommissionierplätze könnten auch von Robotern bediente automatische Kommissionierplätze beziehungsweise Roboterhandlingplätze realisiert sein. Es könnten direkt an den Liften 13 ganz allgemein Artikelhandlingplätze realisiert sein, an denen bestimmte Handlungen an den einzulagernden oder ausgelagerten Artikeln 5 durchgeführt werden. Ebenso könnten Wareneingangsplätze für einzulagernde Artikel 5 direkt an den Liften 13 realisiert sein.

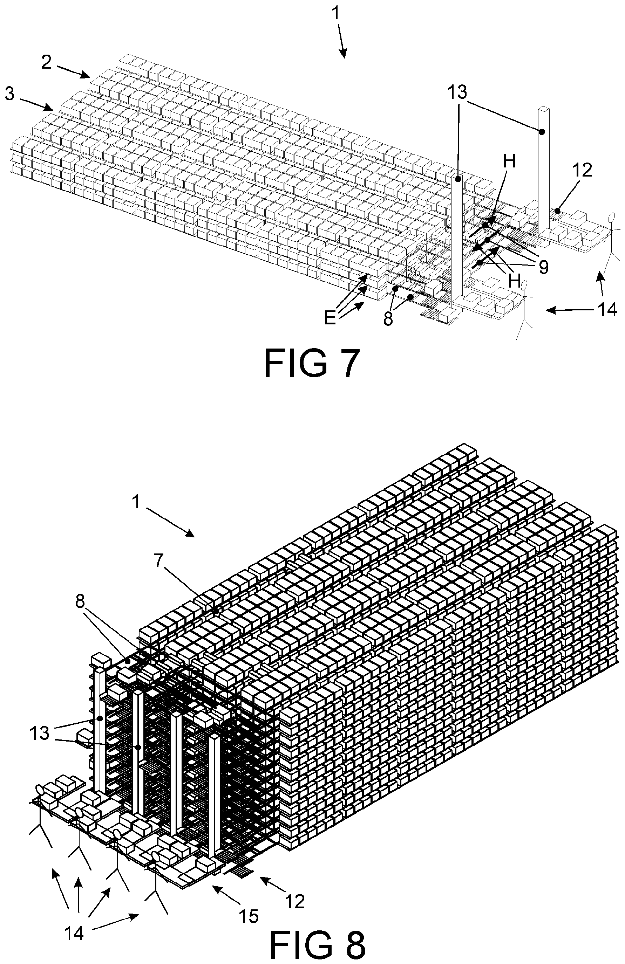

Figur 7 zeigt eine Schrägansicht von drei Regalebenen E und Figur 8 zeigt eine Schrägansicht von 12 Regalebenen E des Regallagers 1 gemäß Figur 6. In Figur 7 sind der besseren Darstellbarkeit halber nur zwei der vier Lifte 13 und Kommissionierplätze 14 dargestellt. Es ist gut erkennbar auf welch kleiner Fläche der Lagerhalle das Regallager 1 mit der Möglichkeit der Sortierung der Artikel 5 in jeder Regalebene E und vier Kommissionierplätzen 14 realisiert werden kann.

Figur 8 zeigt eine Schrägansicht von 12 Regalebenen des Regallagers gemäß Figur 6 und 7.

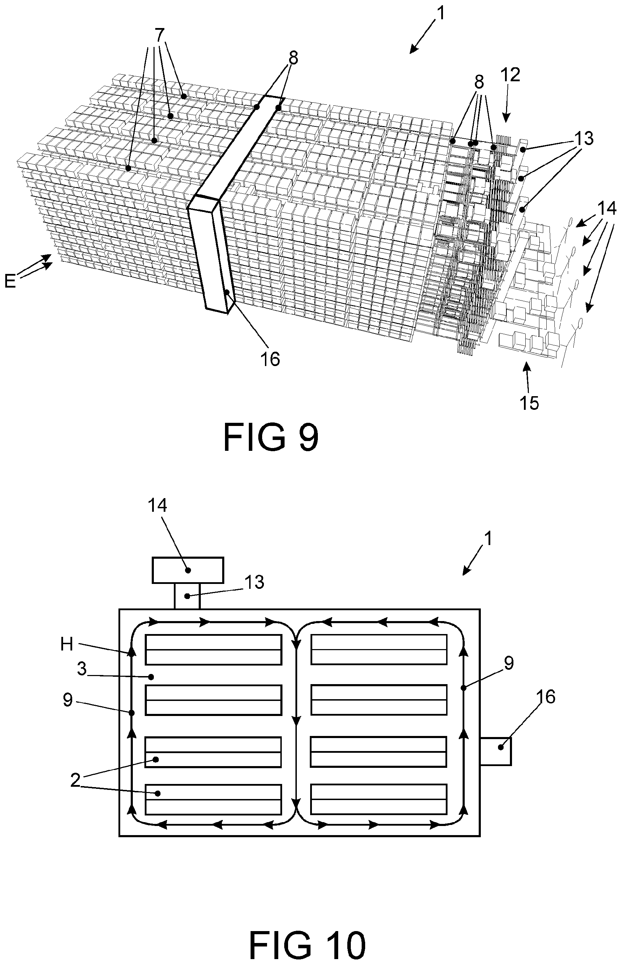

Figur 9 zeigt eine weitere Schrägansicht von 12 Regalebenen E des Regallagers 1 gemäß Figur 6, wobei in an der Mitte der Längsseite des vordersten Regals 3 symbolisch ein Bahnfahrzeug-Lift 16 am Ende einer weiteren in der Mitte des Regallagers 1 angeordneten zweiten Führungsbahn 8 angeordnet ist. Die Lifte 13 sind zum Transport der Artikel 5 vorgesehen und können Bahnfahrzeuge 6 nicht transportieren. Wenn die Steuerungsmittel einen erhöhten Bedarf an Bahnfahrzeugen 6 in einer der Regalebenen E feststellen, da dort in der nächsten Zeit besonders viele Artikel 5 ein- oder ausgelagert werden sollen, dann steuern die Steuerungsmittel Bahnfahrzeuge 6 von Regalebenen E mit weniger Verkehr an, um über den Bahnfahrzeug-Lift 16 in die Regalebene E mit stärkerem Verkehr zu fahren. Dieser Bahnfahrzeug-Lift 16 kann ebenfalls dazu dienen Bahnfahrzeuge 6, die ein Service brauchen oder bereits defekt sind, zu einer Technikerstation zu fahren. Der Bahnfahrzeuglift 16 kann leere Bahnfahrzeuge als auch mit Artikel beladene Bahnfahrzeuge transportieren.

Gemäß einem weiteren Ausführungsbeispiel der Erfindung könnten die Lifte 13 auch dazu ausgebildet sein die Bahnfahrzeuge 6 samt Artikeln 5 zu transportieren. Gemäß einem weiteren vorteilhaften Ausführungsbeispiel könnte in einer geschlossenen Führungsbahn 9 eine in der geschlossenen Führungsbahn 9 verlaufende Führungsbahn vorgesehen sein, die als Abkürzung genutzt werden kann, um nicht den gesamten Kreis der geschlossenen Führungsbahn 9 fahren zu müssen.

Die Steuerungsmittel des Regallagers 1 arbeiten ein Verfahren zum Betreiben des Regallagers 1 zum Auslagern und Kommissionieren von Artikeln 5 ab, wobei folgende Verfahrensschritte durchgeführt werden:
Eines der Bahnfahrzeuge 6 der Regalebene E, in der ein zu kommissionierender Artikel 5 gelagert ist, wird zu dem Lagerplatz 4 in dem Regallager 1 gesteuert, wobei die Streckenabschnitte der geschlossenen Führungsbahn 9 nur in der Hauptrichtung H durchfahren werden, in denen sich mehr als ein Bahnfahrzeug 6 befindet. Anschließend wird der zu kommissionierende Artikel 5 von dem Lagerplatz 4 auf das Bahnfahrzeug 6 geladen. Das Bahnfahrzeug 6 mit dem zu kommissionierenden Artikel 5 der Regalebene E wird bis zu dem Lift 13 oder bis zu der Verbindungsstrecke 12 gefahren so, dass die Streckenabschnitte der geschlossenen Führungsbahn 9 nur in der Hauptrichtung H durchfahren werden, in denen sich mehr als ein Bahnfahrzeug 6 befindet. Der zu kommissionierende Artikel 5 wird mit dem Lift 13 zu dem Kommissionierplatz 14 transportiert und dort von einem Kommissionierer oder Roboter in einen Zielbehälter kommissioniert, wobei gegebenenfalls Restmengen des Artikels 5 entstehen. Der Rücktransport der Restmengen des Artikels 5 in das Regallager 1 erfolgt mit dem Lift 13 und über Führungsbahnen 7 und 8, wobei die Streckenabschnitte der geschlossenen Führungsbahn 9 nur in der Hauptrichtung H durchfahren werden, in denen sich mehr als ein Bahnfahrzeug 6 befindet. Abschließend wird der Artikel 5 vom Bahnfahrzeug 6 auf einen Lagerplatz 4 abgegeben. Durch dieses Verfahren ergeben sich die vorstehend bezüglich des Regallagers 1 angeführten Vorteile.

Figur 10 zeigt eine Draufsicht auf ein Regallager 1 gemäß einem weiteren Ausführungsbeispiel der Erfindung, bei dem acht Doppelregale 2 vorgesehen sind. Die Steuerungsmittel steuern Bahnfahrzeuge so, dass zwei geschlossene Führungsbahnen 9 mit Hauptrichtungen H entstehen. Dieses Regallager 1 weist den Vorteil auf, dass rund um das Regallager 1 Kommissionierplätze 14 direkt an Liften 13 angeordnet sein können, wobei nur einer beispielhaft dargestellt ist. Auch ein Bahnfahrzeug-Lift 16 oder andere Lifte und Plätze, wie zum Beispiel ein Wareneingangsplatz, können überall rund um das Regallager 1 angeordnet sein.

Es kann erwähnt werden, dass das Regallager gemäß einem weiteren Ausführungsbeispiel der Erfindung auch so ausgebildet sein könnte, dass Bahnfahrzeuge mit ein- und ausgelagerten Artikeln auf den Liften zwischen den Regalebenen mit transportiert werden. Diese Liftfahrt könnte auch zum Aufladen des Bahnfahrzeugs genutzt werden.

Weiters kann erwähnt werden, dass als Artikel im Sinne dieser Beschreibung folgende dem Fachmann bekannte Artikel verstanden werden: Behälter mit mehreren gleichen oder verschiedenen "kleineren" Artikel (Arzneimittelpackungen oder ähnliches); Karton (Umkarton beziehungsweise Originalkarton) mit mehreren gleichen oder verschiedenen "kleineren" Artikel (Arzneimittelpackungen oder ähnliches); Behälter mit mehreren Unterteilungen (Fächer) mit jeweils mehreren gleichen oder verschiedenen "kleineren" Artikel (Arzneimittelpackungen oder ähnliches); Tray (Ladehilfsmittel) mit einem Karton; Tray (Ladehilfsmittel) mit mehreren Kartons. Ebenso sei festgehalten, dass das Regallager einfach tiefe oder auch mehrfach tiefe Lagerplätze aufweisen kann, in denen mehrere Artikel hinter einander gelagert werden können.

Weiters kann erwähnt werden, dass an den Liften 13 auch eine Fördertechnik angebunden sein kann, welche den sortierten Behälterstrom an eine Versandrampe, einen Palettierroboter, eine Konsolidierstation oder ähnliches abgibt.

Es kann erwähnt werden, dass mehrere unterschiedliche Ausführungsvarianten möglich sind. Die Steuerungsmittel könnten ein Bahnfahrzeug in einem Streckenabschnitt einer geschlossenen Führungsbahn dann entgegen der Hauptrichtung fahren lassen, wenn sich kein anderes Bahnfahrzeug auf diesem Streckenabschnitt befindet beziehungsweise während der Fahrdauer des Bahnfahrzeugs auf diesem Streckenabschnitt befinden wird. Die Steuerungsmittel könnten ein Bahnfahrzeug in einem Streckenabschnitt einer geschlossenen Führungsbahn aber auch nur dann entgegen der Hauptrichtung fahren lassen, wenn sich kein anderes Bahnfahrzeug auf dieser geschlossenen Führungsbahn befindet beziehungsweise während der Fahrdauer des Bahnfahrzeugs auf dieser geschlossenen Führungsbahn befinden wird. Beide Ausführungsvarianten können im jeweiligen Regallager von Vorteil sein.

Die Steuerungsmittel berechnen die geplanten Fahrwege der einzelnen Bahnfahrzeuge und wissen somit wie lange sich welches Bahnfahrzeug auf welchem Streckenabschnitte befinden wird. Auf diese Weise berechnen die Steuerungsmittel unterschiedliche Varianten wie die Bahnfahrzeuge zu den entsprechenden Lagerplätzen und von diesen zu den entsprechenden Kommissionierplätzen und wieder zurück kommen. Die insgesamt je nach aktueller Frequenz des Ein- und Auslagerns am vorteilhaftesten Variante wird von den Steuerungsmitteln gewählt und in die Praxis umgesetzt. Die vorteilhafteste Variante kann hierbei Rücksicht auf insgesamt kürzeste Transportwege, geringsten Energieverbrauch, geringste Belastung der Lifte, raschester Transport aller Artikel oder der gerade am dringendsten zum Kommissionieren benötigten Artikel nehmen.

## Patentansprüche

1. Regallager (1) zum Lagern von Artikeln (5) in Lagerplätzen (4) von Regalen (2), wobei zumindest eine Regalgasse (3) zwischen zumindest zwei Regalen (2) gebildet ist und, wobei erste Führungsbahnen (7) im Wesentlichen in Richtung der Regale (2) und zweite Führungsbahnen (8) im Wesentlichen quer zu den Regalen (2) vorgesehen sind, auf welchen Führungsbahnen (7, 8) zumindest ein Bahnfahrzeug (6) zum Ein- und Auslagern der Artikel (5) von Steuerungsmitteln gesteuert verfahrbar ist, wobei durch erste Führungsbahnen (7) und zweite Führungsbahnen (8) einer Regalebene (E) eine in sich geschlossene Führungsbahn (9) gebildet ist und, wobei ein Streckenabschnitt der geschlossenen Führungsbahn (9) jeweils von einem Kreuzungspunkt (11) einer der ersten Führungsbahnen (7) mit einer der zweiten Führungsbahnen (8) zum nächsten Kreuzungspunkt (11) einer der ersten Führungsbahnen (7) mit einer der zweiten Führungsbahnen (8) festgelegt ist, **dadurch gekennzeichnet, dass** das Regallager (1) Steuerungsmittel aufweist, die zum Steuern der Bahnfahrzeuge (6) auf den Streckenabschnitten der geschlossenen Führungsbahn (9) beim Ein- und Auslagern der Artikel (5) in einer Hauptrichtung (H) in Form eines Kreisverkehrs ausgebildet sind so, dass der Streckenabschnitt der geschlossenen Führungsbahn (9) von den Bahnfahrzeugen (6) nur in der Hauptrichtung (H) befahren wird, auf dem sich mehr als ein Bahnfahrzeug (6) befindet, und so, dass der Streckenabschnitt der geschlossenen Führungsbahn (9) von einem Bahnfahrzeug (6) entgegen der Hauptrichtung (H) befahrbar ist, auf dem sich kein anderes Bahnfahrzeug (6) befindet.

2. Regallager (1) gemäß Anspruch 1, **dadurch gekennzeichnet, dass** die Regale (2) zumindest zwei Regalebenen (E) aufweisen und, dass an der geschlossenen Führungsbahn (9) jeder Regalebene (E) zumindest ein Lift (13) über eine Verbindungsstrecke (12) mit gegebenenfalls einer Ladebucht (17) verbunden vorgesehen ist, mit dem ausgelagerte Artikel (5) zwischen den Regalebenen (E) transportierbar sind.

3. Regallager (1) gemäß Anspruch 2, **dadurch gekennzeichnet, dass** die Steuerungsmittel zum Steuern des zumindest einen Bahnfahrzeugs (5) je Regalebene (E) derart ausgebildet sind, dass die Streckenabschnitte der geschlossenen Führungsbahnen (9) von den Bahnfahrzeugen (6) in unterschiedlichen Regalebenen (E) in zueinander entgegengesetzten Hauptrichtungen (H) befahren werden.

4. Regallager (1) gemäß Anspruch 3, **dadurch gekennzeichnet, dass** die in direkt übereinander liegenden Regalebenen (E) angeordneten geschlossenen Führungsbahnen (9) jeweils in entgegengesetzten Hauptrichtungen (H) befahren werden.

5. Regallager (1) gemäß einem der Ansprüche 2 bis 4, **dadurch gekennzeichnet, dass** an der geschlossenen Führungsbahn (9) oder an einer Verbindungsstrecke (12) und insbesondere an einem der Lifte (13) zumindest ein Artikelhandlingplatz insbesondere ein Kommissionierplatz (14) oder ein Wareneingangsplatz oder ein Roboterhandlingsplatz vorgesehen ist, an dem Artikel (5) in das Regallager (1) eingelagert oder aus dem Regallager (1) ausgelagert oder in dem Regallager (1) umgelagert werden.

6. Regallager (1) gemäß einem der Ansprüche 2 bis 5, **dadurch gekennzeichnet, dass** zumindest eine und insbesondere beide der zweiten Führungsbahnen (8) der geschlossenen Führungsbahn (9) der Regalebenen (E) durch die Regale (2) führen und die Regalgassen (3) kreuzen.

7. Regallager (1) gemäß einem der Ansprüche 2 bis 5, **dadurch gekennzeichnet, dass** zumindest eine und insbesondere beide der zweiten Führungsbahnen (8) der geschlossenen Führungsbahn (9) der Regalebene (E) an der Stirnseite des Regallagers (1) in Verlängerung der Regalgassen (3) außerhalb der Regale (1) angeordnet sind.

8. Regallager (1) gemäß einem der Ansprüche 2 bis 7, **dadurch gekennzeichnet, dass** an einer der ersten Führungsbahnen (7) oder der zweiten Führungsbahnen (8) ein Bahnfahrzeug-Lift (16) vorgesehen ist, um Bahnfahrzeuge (6) von den Steuerungsmitteln bedarfsorientiert oder serviceorientiert gesteuert in unterschiedliche Regalebenen (E) zu transportieren.

9. Regallager (1) gemäß einem der Ansprüche 1 bis 8, **dadurch gekennzeichnet, dass** zumindest eine zusätzliche erste Führungsbahn (7) oder zweite Führungsbahn (8) an der geschlossenen Führungsbahn (9) vorgesehen ist, um den Weg des Bahnfahrzeugs (6) im Kreisverkehr abzukürzen.

10. Regallager gemäß Anspruch 1, **dadurch gekennzeichnet, dass** die Regale zumindest zwei Regalebenen aufweisen und, dass an der geschlossenen Führungsbahn jeder Regalebene zumindest ein Lift vorgesehen ist, mit dem das Bahnfahrzeug mit einem oder mehreren ausgelagerten Artikeln zwischen den Regalebenen transportierbar ist.

11. Verfahren zum Betreiben eines gemäß einem der Ansprüche 1 bis 10 ausgebildeten Regallagers (1) zum Auslagern und Kommissionieren von Artikeln (5) wobei folgende Verfahrensschritte durchgeführt werden:
Steuern des Bahnfahrzeuges (6) der Regalebene (E) in der ein zu kommissionierender Artikel (5) gelagert ist zu dem Lagerplatz (4) in dem Regallager (1);
Aufnehmen des Artikels (5) von dem Lagerplatz (4) auf das Bahnfahrzeug (6);
Transport des Artikels (5) zu dem Kommissionierplatz (14) an dem der Artikel (5) in den Zielbehälter kommissioniert wird, wobei gegebenenfalls Restmengen des Artikels (5) entstehen;
Rücktransport der Restmengen des Artikels (5) in das Regallager (1), **dadurch gekennzeichnet, dass**
Streckenabschnitte der geschlossenen Führungsbahn (9) beim Ein- und Auslagern der Artikel (5) nur in der Hauptrichtung (H) durchfahren werden, wenn sich mehr als ein Bahnfahrzeug (6) auf der geschlossenen Führungsbahn (9) befindet und, dass
Streckenabschnitte der geschlossenen Führungsbahn (9) beim Ein- und Auslagern der Artikel (5) von einem Bahnfahrzeug (6) entgegen der Hauptrichtung (H) befahren werden können, wenn sich kein anderes Bahnfahrzeug (6) auf dem Streckenabschnitt der geschlossenen Führungsbahn (9) befindet.

## Claims

1. A rack store (1) for storing items (5) in storage locations (4) of racks (2), wherein at least one rack lane (3) is formed between at least two racks (2), and wherein first guide tracks (7) are provided substantially in the direction of the racks (2) and second guide tracks (8) are provided substantially transverse to the racks (2), on which guide tracks (7, 8) at least one rail vehicle (6) can be moved in a controlled manner by control means for storing and removing items (5), wherein
a self-contained guide track (9) is formed by first guide tracks (7) and second guide tracks (8) of a rack level (E) and wherein each track section of the closed guide track (9) is determined from an intersection point (11) of one of the first guide tracks (7) with one of the second guide tracks (8) to the next intersection point (11) of one of the first guide tracks (7) with one of the second guide tracks (8), **characterized in that** the rack store (1) comprises control means, which are configured for controlling the rail vehicles (6) on the track sections of the closed guide track (9) during storing and removing the items (5) in a main direction (H) in the form of a roundabout such that the track section of the closed guide track (9), on which more than one rail vehicle (6) is located, is used by the rail vehicles (6) only in the main direction (H) and such that the track section of the closed guide track (9), on which no other rail vehicle (6) is located, is trafficable by a rail vehicle (6) against the main direction (H).

2. A rack store (1) according to claim 1, **characterized in that** the racks (2) comprise at least two rack levels (E) and that, on the closed guide track (9) of each rack level (E), at least one lift (13) is provided which is connected via a connecting track (12) to, optionally, a loading bay (17) and by means of which items (5) removed from storage are conveyable between the rack levels (E).

3. A rack store (1) according to claim 2, **characterized in that** the control means for controlling the at least one rail vehicle (5) per rack level (E) are designed such that the track sections of the closed guide tracks (9) are used by the rail vehicles (6) on different rack levels (E) in main directions (H) opposite to each other.

4. A rack store (1) according to claim 3, **characterized in that** the closed guide tracks (9) arranged on directly superimposed rack levels (E) are always used in opposite main directions (H).

5. A rack store (1) according to any of claims 2 to 4, **characterized in that**, on the closed guide track (9) or on a connecting track (12) and in particular at one of the lifts (13), at least one item handling station, in particular a picking station (14) or a goods receipt station or a robot handling station, is provided, where items (5) are stored in the rack store (1) or removed from the rack store (1) or restored in the rack store (1).

6. A rack store (1) according to any of claims 2 to 5, **characterized in that** at least one and in particular both of the second guide tracks (8) of the closed guide track (9) of the rack levels (E) pass through the racks (2) and intersect the rack lanes (3).

7. A rack store (1) according to any of claims 2 to 5, **characterized in that** at least one and in particular both of the second guide tracks (8) of the closed guide track (9) of the rack level (E) are arranged on the front side of the rack store (1) as an extension of the rack lanes (3) outside of the racks (1).

8. A rack store (1) according to any of claims 2 to 7, **characterized in that**, on one of the first guide tracks (7) or the second guide tracks (8), a rail vehicle lift (16) is provided in order to transport rail vehicles (6) to different rack levels (E), controlled by the control means in a demand-oriented or service-oriented way.

9. A rack store (1) according to any of claims 1 to 8, **characterized in that** at least one additional first guide track (7) or second guide track (8) is provided on the closed guide track (9) in order to shorten the path of the rail vehicle (6) in the roundabout.

10. A rack store according to claim 1, **characterized in that** the racks exhibit at least two rack levels and that, on the closed guide track of each rack level, at least one lift is provided, by means of which the rail vehicle is transportable with one or several items removed from storage between the rack levels.

11. A method of operating a rack store (1) configured according to any of claims 1 to 10 for removing items (5) from storage and picking them, wherein the following process steps are performed:
guiding the rail vehicle (6) of the rack level (E) in which an item (5) to be picked is stored to the storage location (4) in the rack store (1);
picking up the item (5) from the storage location (4) onto the rail vehicle (6);
conveying the item (5) to the picking station (14) at which the item (5) is picked into the target container, with residual amounts of the item (5) possibly emerging;
returning the residual amounts of the item (5) to the rack store (1), **characterized in that** track sections of the closed guide track (9) are passed through only in the main direction (H) when storing and removing the items (5), if more than one rail vehicle (6) is located on the closed guide track (9), and that
track sections of the closed guide track (9) can be used by a rail vehicle (6) against the main direction (H) when storing and removing the items (5), if no other rail vehicle (6) is located on the track section of the closed guide track (9).

## Revendications

1. Entrepôt à rayonnages (1) pour le stockage d'articles (5) dans des emplacements de stockage (4) de rayonnages (2), dans lequel au moins un couloir de rayonnage (3) est formé entre au moins deux rayonnages (2), dans lequel des premières voies de guidage (7) sont prévues sensiblement en direction des rayonnages (2) et des secondes voies de guidage (8) sont prévues sensiblement transversalement aux rayonnages (2), dans lequel au moins un véhicule guidé sur voie (6) est déplaçable en translation sur lesdites voies de guidage (7, 8) de façon commandée par des moyens de commande pour la mise en stockage des articles (5) et pour leur sortie de stockage, dans lequel une voie de guidage fermée sur elle-même (9) est formée par des premières voies de guidage (7) et par des secondes voies de guidage (8) d'un plan de rayonnages (E), et dans lequel un tronçon de trajet de la voie de guidage fermée (9) est défini respectivement depuis un point de croisement (11) de l'une des premières voies de guidage (7) avec l'une des secondes voies de guidage (8) jusqu'au point de croisement suivant (11) de l'une des premières voies de guidage (7) avec l'une des secondes voies de guidage (8),
**caractérisé en ce que**
l'entrepôt à rayonnages (1) comprend des moyens de commande qui, afin de commander les véhicules guidés sur voie (6) lors de la mise en stockage des articles (5) et lors de leur sortie de stockage dans une direction principale (H), sont réalisés sous la forme d'un rond-point, de telle manière que le tronçon de trajet de la voie de guidage fermée (9) sur lequel se trouve plus d'un véhicule guidé sur voie (6) est parcouru par les véhicules guidés sur voie (6) uniquement dans la direction principale (H), et de telle manière que le tronçon de trajet de la voie de guidage fermée (9) sur lequel aucun autre véhicule guidé sur voie (6) ne se trouve peut être parcouru par un véhicule guidé sur voie (6) en sens opposé à la direction principale (H).

2. Entrepôt à rayonnages (1) selon la revendication 1, **caractérisé en ce que** les rayonnages (2) comprennent au moins deux plans de rayonnages (E), et **en ce qu'**il est prévu au moins un élévateur (13), relié à la voie de guidage fermée (9) de chaque plan de rayonnage (E) via un trajet de liaison (12) comportant le cas échéant une baie de chargement (17), élévateur au moyen duquel des articles (5) sortis du stockage peuvent être transportés entre les plans de rayonnages (E).

3. Entrepôt à rayonnages (1) selon la revendication 2, **caractérisé en ce que** les moyens de commande destinés à commander ledit au moins un véhicule guidé sur voie (5) à chaque plan de rayonnage (E) sont réalisés de telle façon que les tronçons de trajet des voies de guidage fermées (9) dans des plans de rayonnages différents (E) peuvent être parcourus par les véhicules guidés sur voie (6) dans des directions principales mutuellement opposées (H).

4. Entrepôt à rayonnages (1) selon la revendication 3, **caractérisé en ce que** les voies de guidage fermées (9) qui sont agencées dans des plans de rayonnages (E) situés directement les uns au-dessus des autres sont parcourus respectivement dans des directions principales opposées (H).

5. Entrepôt à rayonnages (1) selon l'une des revendications 2 à 4, **caractérisé en ce qu'**il est prévu, au niveau de la voie de guidage fermée (9) ou au niveau d'un trajet de liaison (12) et en particulier au niveau de l'un des élévateurs (13), au moins un emplacement de manipulation d'articles, en particulier un emplacement de groupage (14) ou un emplacement d'entrée de marchandises ou encore un emplacement de manipulation robotisée, auquel l'article (5) peut être mis en stockage dans l'entrepôt à rayonnages (1) ou peut être sorti de stockage hors de l'entrepôt à rayonnages (1), ou encore être changé d'emplacement dans l'entrepôt à rayonnages (1).

6. Entrepôt à rayonnages (1) selon l'une des revendications 2 à 5, **caractérisé en ce qu'**au moins une, et en particulier les deux des secondes voies de guidage (8) de la voie de guidage fermée (9) des plans de rayonnages (E) passe(nt) à travers les rayonnages (2) et croise(nt) les couloirs de rayonnages (3).

7. Entrepôt à rayonnages (1) selon l'une des revendications 2 à 5, **caractérisé en ce qu'**au moins une et en particulier les deux des secondes voies de guidage (8) de la voie de guidage fermée (9) du plan de rayonnages (E) est/sont agencée(s) au niveau de la face frontale de l'entrepôt à rayonnages (1) dans le prolongement des couloirs de rayonnages (3) à l'extérieur des rayonnages (1).

8. Entrepôt à rayonnages (1) selon l'une des revendications 2 à 7, **caractérisé en ce qu'**il est prévu, au niveau de l'une des premières voies de guidage (7) ou des secondes voies de guidage (8), un élévateur pour véhicule guidé sur voie (16) afin de transporter des véhicules guidés sur voie (6) dans des plans de rayonnages différents (E) sous la commande des moyens de commande de manière orientée selon les besoins ou orientée selon le service.

9. Entrepôt à rayonnages (1) selon l'une des revendications 1 à 8, **caractérisé en ce qu'**il est prévu au moins une première voie de guidage supplémentaire (7) ou une seconde voie de guidage supplémentaire (8) au niveau de la voie de guidage fermée (9), afin de raccourcir le chemin du véhicule guidé sur voie (6) dans le rond-point.

10. Entrepôt à rayonnages selon la revendication 1, **caractérisé en ce que** les rayonnages comprennent au moins deux plans de rayonnages et **en ce qu'**il est prévu, au niveau de la voie de guidage fermée de chaque plan de rayonnage, au moins un élévateur avec lequel le véhicule guidé sur voie peut être transporté avec un ou plusieurs articles sortis de stockage entre les plans de rayonnages.

11. Procédé pour l'exploitation d'un entrepôt à rayonnages (1) selon l'une des revendications 1 à 10 pour la sortie de stockage et pour le groupage d'articles (5), dans lequel sont exécutées les étapes suivantes consistant à :
commander le véhicule guidé sur voie (6) du plan de rayonnage (E) dans lequel est stocké un article à grouper (5) jusqu'à l'emplacement de stockage (4) dans l'entrepôt à rayonnages (1) ;
reprendre l'article (5) depuis l'emplacement de stockage (4) jusque sur le véhicule guidé sur voie (6) ;
transporter l'article (5) jusqu'à l'emplacement de groupage (14) auquel l'article (5) est groupé dans le récipient cible, et dans lequel il apparaît le cas échéant des quantités restantes de l'article (5) ;
transporter les quantités restantes de l'article (5) en retour dans l'entrepôt à rayonnages (1),
**caractérisé en ce que**
des tronçons de trajet de la voie de guidage fermée (9) sont parcourus, lors de la mise en stockage de l'article (5) et de sa sortie de stockage, uniquement dans la direction principale (H) lorsque plus d'un véhicule guidé sur voie (6) se trouve sur la voie de guidage fermée (9), et **en ce que**
des tronçons de trajet de la voie de guidage fermée (9) peuvent être parcourus, lors de la mise en stockage de l'article (5) et de sa sortie de stockage, par un véhicule guidé sur voie (6) en sens contraire à la direction principale (H) lorsqu'aucun autre véhicule guidé sur voie (6) ne se trouve sur le tronçon de trajet de la voie de guidage fermée (9).
